# EUROPEAN PATENT APPLICATION

(11) **EP 4 428 114 A1**
(43) Date of publication of application: **11.09.2024**
(21) Application number: 23213694.5
(22) Date of filing: 01.12.2023
(51) Int. Cl.: C05F 17/10, C02F 3/02, C02F 3/12, C02F 11/00, C05F 17/20, C05F 17/40, C05F 17/70, C05F 17/979, C02F 11/02, C02F 103/20

(54) **METHOD AND SYSTEM FOR CONDITIONING MANURE**

(30) Priority: 02.12.2022 NL 2033660
(71) Applicant: Opure B.V., 6716 BX Ede (NL)
(72) Inventor: Aart Duine, Arnaud Marinus, 6705 BJ Wageningen (NL)
(74) Representative: Arnold & Siedsma

(57) **Abstract**

The present invention relates to a method for aerobically conditioning manure or a manure-related substrate in a reactor containing micro-organisms, producing an effluent containing nitrate which can be used as organic fertilizer. The present invention further relates to a continuous flow system for aerobically conditioning manure or a manure-related substrate using micro-organisms, collecting nitrate-containing effluent, and generating heat for warming nearby buildings.

## Description

The present invention relates to a method for conditioning manure. The invention further relates to a system, in particular a continuous flow system, for conditioning manure.

Manure and related substrates are an inevitable by-product of livestock agriculture. Manure is useful to farmers as an organic fertilizer on fields, which increases crop yield. It serves to supply carbon, nitrogen, phosphorus, and other critical nutrients to crops. However, spreading the manure on fields directly can lead to leakage of excess carbon, nitrogen and phosphorus into the environment. Common problems include for example excessive nitrification of the soil and water surrounding the fields, which affects soil pH and the microbial communities living in the environment. This ultimately has a detrimental effect on soil fertility and can increase disease and parasite incidence.

Furthermore, manure spread directly on fields brings about anoxic conditions within the semi-solid manure and the soil it covers, leading to fermentation of carbon and nitrogen in the manure. This fermentation results in the release of for example methane (CH₄), a very potent and well-known greenhouse gas, and ammonia (NH₃), a notorious soil and water pollutant. Finally, fermentation of sulfate present in manure leads to the formation of H₂S, which has a notorioulsy foul smell and can be hazardous to the health of people in the surrounding area. To prevent this, manure is often pre-digested and left near the barn for some time to increase its liquidity, making it easier to spread on the fields. However, such pre-digestion still leads to fermentation and the release of methane and ammonia. In addition, this practice requires space and time for the pre-digestion, and does nothing to help with the odour issues. As such, there exists a need for new methods to condition manure that does not involve fermentation and the subsequent formation of methane and ammonia, and which produces fertilizer from manure that does not smell badly. Such a system needs to be a small investment for the farmer and easy to set up and take down depending on the need of the farmer.

It is an object of the invention to provide a low-cost, easy to use method to condition manure and related substrates and produce an odour-free fertilizer from it, and preventing the release of methane and ammonia from the manure.

The present inventors have developed such a method by contacting manure or manure-related substrates with nitrifying micro-organisms in the presence of enough oxygen to prevent anaerobic conditions in a controlled environment.

The present invention thus relates to a method for conditioning a substrate, in particular manure or a related substrate, comprising aerating a reaction mixture of the substrate and nitrifying bacteria in a reactor with oxygen while stirring the mixture for aerobically nitrifying ammonium present in the substrate.

The reaction mixture preferably further comprises a carbonate source, such as a salt selected from the group of sodium carbonate, potassium carbonate or calcium carbonate or a mix thereof.

In one embodiment, the substrate comprises manure. Due to its semi-solid state, adding manure directly to a bioreactor quickly would lead to anaerobic conditions and subsequently fermentation of both nitrogen and methane in bioreactors known in the art. In such reactors, manure needs to be pretreated to a less solid state or fermented prior to addition of the manure in the bioreactor. As mentioned above, such pretreatment and fermentation generally happen by leaving the manure outside for a while, leading to a foul stench and the release of harmful ammonia and methane emission. The present invention allows for the direct addition of untreated manure into the bioreactor through the addition of oxygen to the manure mixture in the bioreactor. This eliminates the need for fermentation and pre-treatment of the added manure.

Therefore, in one embodiment, the substrate is added to the bioreactor directly without modification or treatment.

In a further embodiment, the manure is added as fresh as possible. This helps to keep fermentation during storage to a minimum and so reduces ammonia and methane emission for the farmer.

In another embodiment, the substrate can comprise a fermented digestate. Such a digestate can be pre-digested manure or another digested organic source.

In one embodiment, activated sludge is added to the reactor as an inoculum to start the conditioning process. Activated sludge is a flocculent culture of microorganisms developed in aeration tanks, for example in wastewater treatment, under controlled conditions. This sludge contains nitrifying bacteria and also micro-organisms that can further assist with metabolizing the carbon in the substrate, preferably into carbon dioxide (CO₂) and water (H₂O). This helps to reduce the availability of carbon for fermentation into methane, which is undesirable. The full oxidation of carbon present in the substrate is environmentally beneficial as it prevents the release of potent greenhouse gases such as methane. The manure itself usually also comprises carbon metabolizing bacteria.

Within the bioreactor, the substrate is then aerobically metabolized. The nitrification of ammonia is a process that can be facilitated by an abundance of micro-organisms. These micro-organisms usually live in soil and can enzymatically oxidize ammonia (NH₃) to nitrite (NO₂⁻), and further oxidize nitrite to nitrate (NO₃⁻) in a second step.

Nitrite is known to be a toxic compound, and its buildup in soil and surrounding water can be damaging to the animals and plants living therein. It also washes out of the soil into surrounding water sources faster than nitrate and is therefore less suitable as nitrogen source for plants than nitrate. As such, complete oxidation of ammonia to nitrate without a nitrite buildup is environmentally and agriculturally beneficial.

The present invention comprises contacting the nitrogen-containing substrate with one or more micro-organisms capable of nitrification. This can include species such as *Nitrosomonas* and *Nitrobacter,* which are respectively capable of oxidizing ammonia to nitrite, and nitrite to nitrate. In a preferred embodiment, multiple species of micro-organisms are used that provide a maximal amount of nitrification without a nitrite buildup.

In another embodiment, trace elements such as copper, molybdenum, zinc, iron, boron, and selenium are added to the mixture. Such elements facilitate rapid microbial growth and are crucial co-factors of many nitrification-related enzymes such as ammonia monooxygenase. Their addition therefore optimizes the nitrification process.

The effluent from the process may be used as a fertilizer that has no smell and does not emit ammonium and methane.

In order to enrich the fertilizer with other useful minerals a co-substrate may be added to the reaction mixture. Such useful minerals are for example nitrogen N, phosphor P or potassium K. By adding co-substrates to the reaction mixture, the effluent resulting from the method of the invention can be used as a substitute for chemical fertilizers.

Different fertilizers for different crops may have different ratios between N, P and K. The ratio for potato is for example 5-4-15. According to the invention this ratio in the end product of the method of the invention can be regulated by the choice of co-substrates used. For example, vinasse has twice as much potassium as nitrogen and is thus a suitable co-substrate for use in a fertilizer for potatoes. Vinasse does not comprise phosphate which may therefore be regulated by adding whey permeate as a co-substrate.

Another suitable potassium source is so-called "K-glycerin", which is the glycerin effluent from the biodiesel industry. Glycerin has a relatively high energy output that can be used to heat the reactor.

In a further embodiment, vinasse is added to the reaction mixture as a source of potassium. Vinasse is a byproduct of the sugar and ethanol industry. It is produced from molasses, which are made by the processing of sugarcane and sugar beet into sugar and bio-ethanol.

The reaction mixture may be also supplemented with other co-substrates that are rich in minerals for fertilizers, such as whey permeate or ammonium sulfate. Ammonium sulfate can for example be supplied from an air scrubber that is used for cleaning the air emitted from the farm. Whey permeate is the by-product of the dairy industry.

Oxidation of ammonia into nitrate and of organic carbon into CO₂ requires an oxygen source. Such a source can be molecular oxygen (O₂) from air, or pure oxygen which can for example be purchased from industrial companies or which is a by-product of hydrogen production. Since the oxygen content in air is too low for the present process, the air to be used must be enriched in oxygen.

Anaerobic conditions in the reactor could lead to the establishment of fast-growing micro-organisms and fermentation of organic carbon compounds into methane gas. In addition to being a powerful greenhouse gas, large amounts of methane also represent a potential explosion hazard. Therefore, the invention comprises aerobic metabolism of carbon. To supply enough oxygen for this nitrification process and to prevent carbon fermentation, a continuous oxygen supply to the reaction mixture is preferred. In one embodiment, oxygen enriched air is used to aerate the mixture. In another embodiment, pure oxygen can be used.

In one embodiment, the oxygen is continually supplied to the mixture in the bioreactor. This can for example be done with a blower. However, it was found that the use of normal outside air leads to excessive foaming of the mixture in the reactor due to the relatively low oxygen concentration. Therefore, in a preferred embodiment, oxygen-enriched air is used. Preferably, at least 80 vol.% oxygen gas is added to the reactor instead of normal air for oxygenation of the mixture. This way, a lower physical amount of gas can be used to prevent foaming and still supply enough oxygen for optimal nitrification and aerobic carbon metabolism. Furthermore, the high concentration of oxygen in the gas used is necessary to prevent anoxic conditions when the substrate is not a liquid and has high viscosity, such as when using undigested manure.

Preferably, oxygen is produced by means of the well-known PSA technology, which is safer than the addition of pure oxygen from a tank. PSA stands for Pressure Swing Adsorption and is a well-known technique for separating certain gas species including oxygen from mixtures of gas. Oxygen may also be the by-product of hydrogen production. As an alternative to PSA the Vacuum Swing Adsorption (VSA) technology may be used.

The pH in the substrate is known to be important for the growth and ammonia oxidizing capabilities of the bacteria used. It is also important for the bioavailability and redox state of inorganic nutrients in the substrate. Therefore, in one embodiment, a carbonate source is added to the mixture. The carbonate source can be magnesium carbonate (MgCO₃), sodium carbonate (Na₂CO₃), potassium carbonate (K₂CO₃), calcium carbonate (CaCO₃) or another carbonate source. Of these MgCOs is especially preferred since it is not harmful to the environment, soluble at the reaction pH and inexpensive. Upon addition of the carbonate source, the molecule will dissolve and dissociate into the negative anionic carbonate (CO₃²⁻) and its previously conjugated cation. The carbonate source can be added to the substrate directly in solid form, such as a powder, but it can also be dissolved in an appropriate solvent first and then added to the substrate. The addition of carbonate salt helps to regulate the pH in the bioreactor by adding a multivalent anion that can buffer. Carbonate has several protonation states that dynamically regulate the pH.

In an alternative embodiment, lye can be added instead of or in addition to carbonate. Suitable lye sources are slaked lime (calcium hydroxide Ca(OH)₂), caustic soda (sodium hydroxide NaOH), potassium lye (KOH).

Carbonate can also serve as carbon source for the nitrifying bacteria. Nitrifying bacteria are autotrophs and produce complex organic compounds (such as carbohydrates, fats, and proteins) using carbon from simple substances such as carbon dioxide and carbonate. The bacteria thus use carbonates to grow.

Finally, the previously conjugated cation can conjugate with the nitrate produced by the nitrifying bacteria, allowing for collection of nitrate salts (NaNO₃, KNO₃, Ca(NO₃)₂) from the reactor.

Preferably, the nitrate produced is collected in the form of KNO₃ as potassium salt is the most useful nitrate salt in fertilizers. Vinasse is especially suitable as a (co)-substrate as it contains high amounts of potassium.

CO₂ is continuously produced by the bacteria in the reactor through aerobic metabolism of the carbon in the substrate. This CO₂ can diffuse through the substrate and leave the reactor, but when using semi-solid substrates such as untreated manure, some CO₂ may become trapped in bubbles in the substrate. This causes the pH in the reactor to drop, creating adverse growth and ammonia oxidation conditions for the bacteria present. Therefore, in one embodiment, short blasts of normal air are periodically blown though the reactor from the bottom to release the trapped CO₂ bubbles from pockets in the reactor mixture.

In a further embodiment, the method is performed in a continuous flow system or chemostat. Such a system allows for continuous fermentation and eliminates the need for starting up the nitrification process upon contacting the substrate with the nitrifying micro-organisms and other additives. It also allows for controlling parameters such as temperature and pH effectively. Finally, it allows for collection of small volumes of the mixture without ending the nitrification process.

The pH of the mixture in the reactor is suitably kept between 5.0 and 9.0, preferably between 5.0 and 8.0, more preferably between 6.0 and 7.0. A neutral pH is conducive for bacterial growth and promotes dissolution of the carbonate source and the nitrate. In addition, the optimal pH for nitrification is between 5.0 and 8.0. In one embodiment, the pH is regulated by the addition of an appropriate amount of carbonate salt. The skilled person knows how to determine the required quantity to reach the desired pH in the bioreactor.

The temperature in the reactor is kept between 30 and 40°C, preferably between 32 and 38°C, and is more preferably about 35°C. This temperature promotes bacterial growth of many species and allows for rapid nitrification.

During incubation, the micro-organisms could sink to the bottom of the reactor and form a thick fraction within the reactor. This thick bottom fraction can quickly become anoxic due to the nitrification and general carbon metabolism, which will lead to methane production and decreased nitrification efficiency. Therefore, the mixture is preferably stirred.

Therefore, in one embodiment, the reactor comprises a top mixer to stir the mixture. This facilitates oxygen diffusion in the mixture and prevents aggregation of the mixture, both within the mixture and to the reactor walls.

After removal from the reactor the mixture can be separated into a thin and a thick fraction. The thin fraction contains nitrate salts (NaNO₃, KNO₃, CaNO₃). In one embodiment, the collected nitrate-containing thin fraction, or effluent, is used as agricultural fertilizer. The thin fraction may also be used to flush the stables to remove manure, or to lower the pH in the manure pit to keep the emission of NH₃ and H₂S low. The presence of nitrate in the conditioned manure inhibits production of H₂S and the corresponding foul odor.

It was found that the nitrification process produces excess heat, which can be collected and used for various purposes. In one embodiment, the method involves collecting through heat exchange. In a further embodiment, this collected heat is used to warm nearby buildings, such as, but not limited to, stables or living quarters.

In one embodiment of the invention, the removal of effluent and addition of fresh manure is a continuous process, but there may also be an interval-based supply of substrate and removal of effluent. The added amount should be relatively small to keep the conditioning process going. Adding large volumes of new substrate might disturb the nitrification process and should thus be avoided. This way, the reactor can remain continually operational, and the nitrification process does not need be restarted after collection. In a preferred embodiment, the added substrate also contains the carbonate source and/or trace elements. The reactor is thus a chemostat to which fresh substrate is continuously added, while the conditioned substrate is continuously removed at the same rate to keep the volume of the reaction mixture constant.

In yet a further embodiment, the average retention time of the substrate in the reactor is between 5 and 20 days, preferably between 8 and 15 days, and more preferably about 10 days. The retention time must be sufficient for the substrate to be completely nitrified.

The manure is suitably pig manure, calf manure or cow manure. Chicken manure is less suitable since it is too solid and needs to be diluted before use. It may also contain grit.

Manure is a variable product. Different batches can have different dry matter contents and varying amounts of NH₄. The ratio between dry matter and NH₄ is essentially linear. Thus, the higher the dry matter content, the higher the NH₄ content. The amount of oxygen to be added per hour depends on these variables. In the following table the oxygen demand is shown as a function of dry matter content.

| Dry matter (%) | O_{2 demand per ton} (kg/ton) | kg O₂/h addition of 10 ton manure/day |
|---|---|---|
| 2.5 | 17 | 7.1 |
| 5 | 34 | 14.3 |
| 7.5 | 51 | 21.4 |
| 10 | 68 | 28.5 |
| 12.5 | 86 | 35.6 |

The invention further relates to a system for conditioning manure or related substrates. The system comprises a reactor vessel for containing the substrate, means for supplying substrate to the reactor, means for supplying oxygen to the reactor, means for cooling the reactor and means for removing effluent from the reactor. The system may further comprise a mixer for homogenizing the reaction mixture, in particular a top mixer. Other supply means may comprise means for supplying a carbonate source, activated sludge and/or trace elements and means for introducing air bursts into the reactor.

Suitably, the reactor is placed on a farm, where the collected effluent can be directly used on the surrounding farmland and the stored heat may be used immediately in the animal stables. This saves transport costs and alleviates the need for the farmer to buy industrial fertilizer. In addition, the nitrate-containing effluent does not smell like manure, and also does not contain significant amounts of nitrite. This is beneficial for both humans and nature in the vicinity of use.

The conditioning parameters can be varied to meet the requirements of the fertilizer. The pH is regulated by means of the amount of carbonate and/or co-substrate. If it is desired to keep the phosphate content in the thin fraction low then the pH should be high, i.e. around 8.5. If the presence of phosphate in the thin fraction is desired, the pH needs to be low, i.e. around 4.5.

There is also a cost aspect. Carbonates are relatively expensive, and it is then desirable to keep the dose low which leads to a low pH around 5. If a high pH, around 8 is desired then the amount of carbonate to be added to the reaction mixture must be much higher.

In one embodiment, the present invention relates to a continuous flow system for nitrification of a nitrogen-containing substrate, wherein said system for nitrification of a nitrogen-containing substrate comprises at least one bioreactor, at least one aeration source, and means for collecting part of mixture.

In one embodiment, the reactor has a volume between 50 and 200 m³, preferably between 75 and 150 m³, more preferably about 100 m³. Such a relatively small size makes the reactor easy to set up and take down again. This makes the reactor suitable for farmers with smaller and/or variable demands for such a system. Because the reactor does not contain any complicated or expensive equipment, it can be used by all kinds of farmers.

It was found that the nitrification process in the reactor produces excess heat. The reactor must therefore be cooled to a temperature below 40°C. In one embodiment, the heat produced can be collected and used for various purposes. In one embodiment, the continuous flow system of the invention thus comprises means for collecting this heat, for example via a heat exchanger. In another embodiment, the reactor has a double wall, in between which a suitable medium for carrying heat can be led to collect warmth via a loop, for example water. This warmth can then be used in an underfloor heating system or heated further with for example a heat pump and then used in a heating radiator, or stored. In one embodiment, the heated water from such a water loop can thus be used to heat buildings. In a preferred embodiment, the reactor is placed on a farm, and the heated water is used to heat nearby stables or living quarters.

Therefore, in a particular embodiment, the system comprises:
a) a reactor for the nitrification process for holding the reaction mixture;
b) means for supplying substrate to the reactor;
c) optionally one or more means for supplying additive, such as carbonates, activated sludge or trace elements to the reactor;
d) an aeration source;
e) a heat exchanger for collecting heat from the reactor; and
f) means for removing the effluent produced by the nitrification process from the reactor.

Furthermore, a storage unit for the effluent may be provided. If desired the collected effluent can be separated in a thin and thick fraction (for example with a centrifuge).

In a preferred embodiment, the system comprises:
a) a reactor for the nitrification process comprising the mixture of the substrate, bacterial sludge, and other additives;
b) means for supplying substrate to the reactor;
c) optionally one or more means for supplying additive, such as carbonates, activated sludge or trace elements to the reactor;
d) an aeration source;
e) a water loop system, optionally in the reactor wall, which can collect heat from the reactor; and
f) means for removing the effluent produced by the nitrification process from the reactor, and
g) optional storage means for holding the conditioned effluent.

The reactor is designed based on the HRT (hydraulic Retention Time). This means that the reactor is designed based on the amount of substrate added and the amount of effluent removed. Although the addition and removal are preferably a continuous process, it is also possible to add in small intervals of for example 1-5 minutes. After addition of new substrate, the supply is stopped for a short time to mix the new substrate into the reaction mixture. During this time, the removal of effluent is also suitably paused.

The means for supplying substrate to the reactor suitably comprise a pump. Optionally a sieve may be provided before the supply means for removing coarse materials, such as plastic, metals, etc. from the substrate.

In a further embodiment, the system also comprises a heating system in a second building connected to the reactor. The heating system is for using the heat produced by the process of the invention, preferably after further heating to a higher temperature by means of a heat pump.

Typically, a reactor for conditioning manure and suitable for placement on a farm has a content of about 100 m³. Reactors for digestate are typically larger.

The invention is illustrated in the following figure:

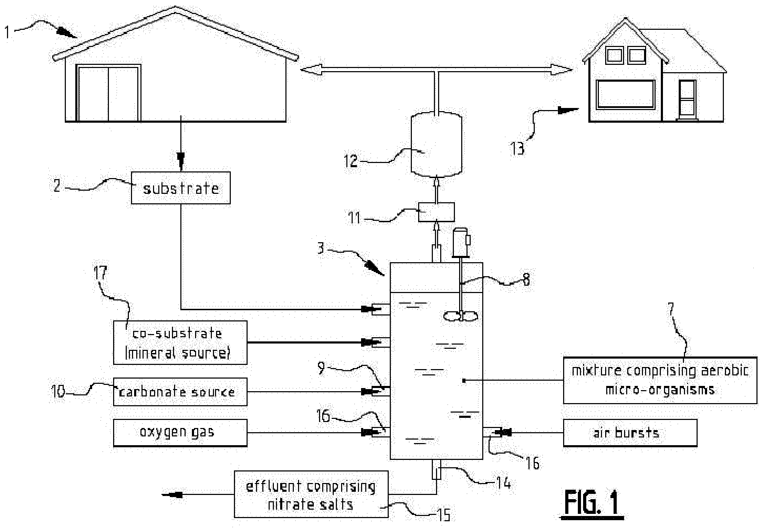

**Figure 1**: schematic representation of the process.

Figure 1 shows that a substrate from a barn 1, typically manure 2, is supplied to a reactor 3. Oxygen gas 4 is supplied via a conduit 5 at the bottom 6 of the reactor 3. The reactor 3 comprises a reaction mixture 7, comprising aerobic microorganisms and substrate. The reaction mixer is stirred by means of a top-mixer 8 to avoid the entrapment of CO₂ bubbles and to homogeneously distribute the oxygen through the substrate. The reactor is furthermore provided with a supply 9 for a carbon source 10. Heat generated in the reactor is collected by a heat exchanger 11, and typically transferred to a boiler 12. This heat is then used to heat the barn 1 or another building 13. The reactor has another conduit 14 at the bottom to remove whole or part of the reaction mixture 7 as effluent 15.

The invention is preferably performed as a continuous flow process in which part of the reaction mixture 7 is periodically removed from the reactor, for example to be used as a natural fertilizer. One or more air inlets 16 may be provided. If anaerobic pockets develop in the reaction mixture, the whole process may become anaerobic, which is undesirable since methane may them be formed. Periodically, air is brought into the reactor via such inlets to bubble up through the reaction mixture. The system may be provided with additional means for supplying ingredients to the reaction mixture, such as trace elements or compositions having a high mineral content, such as vinasse (17).

The present invention will now be illustrated in the examples that follow. The examples are not intended to limit the invention in any way.

### EXAMPLES

### EXAMPLE 1

### Collection of nitrate containing effluent from conditioned manure in a reactor

A reactor of 100 cubic meters with a top-mixer was filled with fresh manure and mixed with nitrifying bacteria from activated sludge. An oxygen-enriched air stream comprising about 80% O₂ was blown into the reactor from an oxygen tank. After an initial incubation period of ... days to start up the nitrification process, the system was run as a continuous flow process. The temperature of the reactor was kept between 30 and 40°C to avoid damage to the nitrifying bacteria. The reaction mixture was stirred continuously.

To keep the mixture in the reactor fully aerobic, 10-125 kg/h O₂ was added to the mixture. The pH of the mixture was kept between 6 and 7. This was done through the addition of 0-10 kg/h magnesium carbonate. Short bursts of air were periodically blown through the mixture from the bottom to free CO₂ bubbles that are trapped in the mixture.

After the initial incubation period, the conditioned reaction mixture (effluent) was continuously removed and fresh manure was continuously added. The conditioned mixture was collected in a storage container. The parameters are shown in **Table 1.**

**Table 1**

| | MgCO₃ | minimal value | maximal value | | | | | | | | | | |
|---|---|---|---|---|---|---|---|---|---|---|---|---|---|
| mg/l | - | mg/l | mg/l | | norm m³/ton | ppm | days | days | °C | °C | mg/l | mg/l | mg/l |
| input NH₄-N | pH reactor | output NO₃-N | output NO₃-N | NH₄ output (mg/l) | CH₄ potency | H₂S potentie | HRT | min. HRT | opt. T | min. T | O₂ content | min. O₂ content | max O₂ content |
| 1000 | 5-8 | 1000 | 1200 | < 5 | 0 | 0 | 10 | 5 | 30-38 | 20 | 2-4 | 1 | 10 |
| 1500 | 5-8 | 1500 | 1800 | < 5 | 0 | 0 | 10 | 5 | 30-38 | 20 | 2-4 | 1 | 10 |
| 2000 | 5-8 | 2000 | 2400 | < 5 | 0 | 0 | 10 | 5 | 30-38 | 20 | 2-4 | 1 | 10 |
| 2500 | 5-8 | 2500 | 3000 | < 5 | 0 | 0 | 10 | 5 | 30-38 | 20 | 2-4 | 1 | 10 |
| 3000 | 5-8 | 3000 | 3600 | < 5 | 0 | 0 | 10 | 5 | 30-38 | 20 | 2-4 | 1 | 10 |
| 3500 | 5-8 | 3500 | 4200 | < 5 | 0 | 0 | 10 | 5 | 30-38 | 20 | 2-4 | 1 | 10 |
| 4000 | 5-8 | 4000 | 4800 | < 5 | 0 | 0 | 10 | 5 | 30-38 | 20 | 2-4 | 1 | 10 |
| 4500 | 5-8 | 4500 | 5400 | < 5 | 0 | 0 | 10 | 5 | 30-38 | 20 | 2-4 | 1 | 10 |
| 5000 | 5-8 | 5000 | 6000 | < 5 | 0 | 0 | 10 | 5 | 30-38 | 20 | 2-4 | 1 | 10 |
| 5500 | 5-8 | 5500 | 6600 | < 5 | 0 | 0 | 10 | 5 | 30-38 | 20 | 2-4 | 1 | 10 |

## Claims

1. Method for conditioning a substrate, in particular manure or a related substrate, comprising aerating a reaction mixture of the substrate and nitrifying bacteria in a reactor with oxygen while stirring the mixture for aerobically nitrifying ammonium present in the substrate.

2. Method as claimed in claim 1, wherein the reaction mixture further comprises a carbonate source.

3. Method as claimed in claim 2, wherein the carbonate source comprises a salt selected from the group of sodium carbonate, potassium carbonate or calcium carbonate or a mix thereof.

4. Method as claimed in any of the claims 1 to 3, wherein the pH of the reaction mixture lies between 5.0 and 9.0, preferably between 5.0 and 7.5, more preferably between 6.0 and 7.0.

5. Method as claimed in any of the claims 1 to 4, wherein the reaction mixture further comprises activated sludge as a source of micro-organisms capable of metabolizing carbon, which sludge is added at the start of the conditioning method.

6. Method as claimed in any one of the claims 1 to 5, wherein the reaction mixture further comprises trace elements, in particular selected from copper, zinc, boron, selenium, iron, molybdenum or combinations thereof.

7. Method as claimed in any one of the claims 1 to 6, wherein the reaction mixture further comprises one or more co-substrates comprising minerals suitable for fertilization.

8. Method as claimed in claim 7, wherein the co-substrate is selected from vinasse, whey permeate, ammonium sulfate or combinations thereof.

9. Method as claimed in any one of the claims 1 to 8, wherein the oxygen is provided in the form of air, air comprising at least 80% oxygen, pure oxygen, oxygen produced by a pressure swing adsorption method.

10. Method as claimed in any one of the claims 1 to 9, wherein the temperature of the reaction mixture lies between 30 and 40°C, preferably between 32 and 38°C, more preferably between 33 and 37°C and is most preferably about 35°C.

11. Method as claimed in any one of the claims 1 to 10, wherein 1 to 30 vol.%, preferably 5 to 20 vol.%, more preferably about 10 vol.% volume of the reaction mixture is daily removed from the reactor and replaced with the same volume of new substrate.

12. Method as claimed in any one of the claims 1 to 11, wherein the average incubation time of the reaction mixture in the reactor is between 5 and 15 days, preferably between 8 and 12 days, more preferably about 10 days.

13. Method as claimed in claim 11 or 12, wherein the method is performed in a continuous flow system.

14. Method as claimed in any one of claims 1 to 13, wherein the substrate is manure, a fermented digestate or a mixture thereof.

15. Method as claimed in any one of the claims 1 to 14, wherein the nitrifying bacteria comprise *Nitrobacter* and/or *Nitrosomonas.*

16. Method as claimed in any one of the claims 1 to 15, wherein heat produced by the nitrification process is collected through a heat exchanger.

17. Method as claimed in claim 16, wherein the heat collected is used to warm a building.

18. System for conditioning manure or a related substrate, comprising a reactor for containing the substrate, means for supplying substrate to the reactor, means for supplying oxygen to the reactor, and means for removing effluent from the reactor.

19. System as claimed in claim 18, further comprising a mixer for homogenizing the reaction mixture, in particular a top mixer.

20. System as claimed in claim 18 or 19, further comprising means for supplying additives such as a carbonate source, activated sludge or trace elements and optionally means for introducing air bursts into the reactor.

21. System as claimed in any one of the claims 17-20, wherein the reactor has a volume of 50-200 m3, preferably 75-150 m³, more preferably about 100 m³.

22. System as claimed in any of the claims 17-21, wherein the system further comprises a heat exchanger for collecting heat produced in the reactor.

23. System as claimed in claim 22, wherein the reactor comprises a double wall filled with a fluid as the heat exchanger.
